# EUROPÄISCHE PATENTANMELDUNG

(11) **EP 2 913 303 A1**
(43) Veröffentlichungstag der Anmeldung: **02.09.2015**
(21) Anmeldenummer: 15000212.9
(22) Anmeldetag: 24.01.2015
(51) Int. Cl.: C01G 39/00, B01J 23/28, B01J 35/10

(54) **Starke Festkörpersäure auf der Basis eines Polyoxometalats**

(30) Priorität: 27.02.2014 DE 102014002854
(71) Anmelder: Forschungszentrum Jülich GmbH, 52425 Jülich (DE)
(72) Erfinder: Botar, Bogdan, 52428 Jülich (DE)

(57) **Zusammenfassung**

Im Rahmen der Erfindung wurde eine Festkörpersäure entwickelt. Diese umfasst einen anionischen Anteil aus einer Mehrzahl von Oxyanionen mindestens eines Metalls sowie einen kationischen Anteil, der durch Protonen teilsubstituiert ist. Erfindungsgemäß liegt das Metall des anionischen Anteils mindestens teilweise in einer niedrigeren als der höchsten Oxidationsstufe vor.

Es wurde erkannt, dass der anionische Anteil auf diese Weise mit besonders vielen negativen Ladungen ausgestattet werden kann. Es lässt sich nun im Vergleich zu den bekannten Festkörpersäuren eine deutlich größere Anzahl an kationischen Einheiten pro anionischer Einheit durch Protonen substituieren, so dass die gleiche Stoffmenge an Säure deutlich mehr katalytisch aktive Zentren (Sites) aufweist.

Das Verfahren zur Herstellung einer Festkörpersäure aus einem wasserlöslichen Polyoxometalatsalz mit einem anionischen Anteil und einem kationischen Anteil ist erfindungsgemäß zweistufig. Zuerst wird der kationische Anteil des Salzes mindestens teilweise durch größere, hydrophobe oder amphiphile kationische Einheiten ersetzt. Anschließend werden die hydrophoben oder amphiphilen kationischen Einheiten durch Protonen teilsubstituiert. Durch die erste Substitution des kationischen Anteils wird das Polyoxometalat gleichzeitig stabilisiert und wasserunlöslich gemacht. Dies schafft die Voraussetzung dafür, dass anschließend kationische Einheiten durch Protonen ersetzt werden können, ohne dass die Struktur zusammenbricht.

## Beschreibung

Die Erfindung betrifft eine Festkörpersäure und ein Herstellungsverfahren.

### Stand der Technik

Herkömmliche flüssige oder gasförmige Säuren, wie z. B. Flusssäure (HF) oder Schwefelsäure (H₂SO₄), werden beim Kontakt mit anderen Materialien zersetzt, indem Teile der Säure mit den Materialien oder Teilen davon zu einem Produkt reagieren. Dies kann das Material angreifen (korrodieren) und/oder auf biologische Materialien toxisch wirken. Gleichzeitig wird die Säure hierbei verbraucht, d.h. eine Formeleinheit Säure kann die Reaktion nur genau einmal eingehen. Wenn das Material oder sein beim Kontakt mit der Säure entstehendes Reaktionsprodukt den gleichen Aggregatzustand hat wie die Säure, ist eine Abtrennung der Säure zwecks Wiederverwendung des nicht verbrauchten Anteils schwierig.

Festkörpersäuren haben eine deutlich schwächer ausgeprägte Tendenz, sich beim Kontakt mit anderen Materialien zu zersetzen. Sie sind daher deutlich weniger oder gar überhaupt nicht korrosiv und zugleich deutlich weniger giftig. Zugleich sind sie von flüssigen oder gasförmigen Materialien und Reaktionsprodukten auf Grund ihres festen Aggregatzustands leicht abzutrennen. Auf Grund ihrer Stabilität sind sie als Katalysatoren geeignet, die das Zustandekommen chemischer Reaktionen erleichtern, ohne sich hierbei selbst chemisch zu verändern. Eine Einheit Katalysator kann daher beliebig viele chemische Reaktionen nacheinander katalysieren. Beispiele für säurekatalysierte Prozesse sind die Synthese von Ethylacetat aus Ethylen und Essigsäure sowie die Amination von Keton zu Imin.

Aus (Makoto Misono, "Unique acid catalysis of heteropoly compounds (heteropolyoxometalates) in the solid state", Chemical Communications 2001, 1141-1152) sind Polyoxometalate mit Cäsium als kationischem Anteil, welches teilweise durch Protonen substituiert ist, als molekulare Festkörpersäuren bekannt. Diese Säuren liegen in der Regel in einer Keggin-Struktur oder in einer Dawson-Struktur vor.

### Aufgabe und Lösung

Es ist die Aufgabe der Erfindung, die saure Wirkung von Festkörpersäuren und damit auch ihre katalytische Aktivität zu steigern.

Diese Aufgaben werden erfindungsgemäß gelöst durch eine Festkörpersäure gemäß Hauptanspruch sowie durch ein Herstellungsverfahren gemäß Nebenanspruch. Weitere vorteilhafte Ausgestaltungen ergeben sich aus den darauf rückbezogenen Unteransprüchen.

### Gegenstand der Erfindung

Im Rahmen der Erfindung wurde eine Festkörpersäure entwickelt. Diese umfasst einen anionischen Anteil aus einer Mehrzahl von Oxyanionen mindestens eines Metalls sowie einen kationischen Anteil, der durch Protonen teilsubstituiert ist. Der anionische Anteil wird in der Literatur als Polyoxometalat bezeichnet. Die Verbindung von anionischem und kationischem Anteil ohne Teilsubstitution des kationischen Anteils durch Protonen ist ein Polyoxometalatsalz. Durch die Teilsubstitution des kationischen Anteils durch Protonen wird aus dem Polyoxometalatsalz eine Polyoxometalatsäure.

Erfindungsgemäß liegt das Metall des anionischen Anteils mindestens teilweise in einer niedrigeren als der höchsten Oxidationsstufe vor. Wenn das Metall nicht vollständig, sondern nur teilweise in einer niedrigeren als der höchsten Oxidationsstufe vorliegt, dann ist das Polyoxometalat gemischtvalent.

Es wurde erkannt, dass der anionische Anteil auf diese Weise mit besonders vielen negativen Ladungen ausgestattet werden kann. Diese sind durch entsprechend viele kationische Einheiten kompensiert, damit das Metalat als Salz insgesamt elektrisch neutral ist. Es lässt sich nun im Vergleich zu den bekannten Festkörpersäuren eine deutlich größere Anzahl an kationischen Einheiten pro anionischer Einheit durch Protonen substituieren. Dies schafft pro Einheit Stoffmenge an Säure eine deutlich größere Anzahl aktiver Zentren (Sites), an denen eine chemische Reaktion katalysiert werden kann.

Vorteilhaft liegen zwischen 10 % und 40 % der Metallatome des anionischen Anteils in einer niedrigen als der höchsten Oxidationsstufe vor, d.h. sie sind gegenüber der höchsten Oxidationsstufe reduziert. Ein Anteil von mindestens 10 % reduzierter Metallatome ermöglicht die Bildung großer, aber stabiler Cluster mit vielen (100 oder mehr) Metallatomen. Gleichzeitig gibt es umso mehr katalytisch aktive Zentren (Sites), je mehr Metallatome des anionischen Anteils reduziert sind. Bei einem Anteil reduzierter Metallatome deutlich oberhalb von 40 % macht sich jedoch bemerkbar, dass eine nicht vollständige Oxidation der Metallatome mit einer erhöhten Affinität zu chemischen Reaktionen einhergeht. Die Festkörpersäure verliert ihre Stabilität und kann zersetzt werden.

Vorteilhaft ist das Metall des anionischen Anteils ein Übergangsmetall, insbesondere Molybdän. Diese Metalle haben besonders viele verschiedene nutzbare Oxidationsstufen, so dass ein optimaler Kompromiss zwischen der Anzahl der negativen Ladungen im anionischen Anteil und der Stabilität gewählt werden kann. Das Molybdän kann im Interesse einer erhöhten Stabilität und zwecks weiterer Steigerung der Anzahl negativer Ladungen teilweise durch Vanadium oder Eisen substituiert sein. Dies kann auch die Synthese erleichtern.

In einer besonders vorteilhaften Ausgestaltung der Erfindung liegt der anionische Anteil in Form von Clustern mit jeweils mindestens 102 Molybdän-Atomen (Riesen-Polyoxomolybdat-Cluster) vor. Bei den bekannten Festkörpersäuren in Keggin-Struktur wäre es von Nachteil, die Metallatome im anionischen Anteil teilweise zu reduzieren, da die Stabilität geschwächt würde. Dagegen erzwingt bei großen Polyoxomolybdat-Clustern bereits die Bedingung der Ladungsneutralität ohne weiteren Eingriff bei der Herstellung, dass ein gewisser Anteil der Molybdän-Atome reduziert ist. Die teilweise Reduzierung der Metallatome sorgt also für die Stabilität der Festkörpersäure, statt sie zu schwächen. Die selbstorganisierte Synthese eines Mo₁₅₄-Ringclusters schafft auf diese Weise im anionischen Anteil bereits 14 negative Ladungen. In einem sphärischen Molybdän-Vanadium-Cluster hat der anionische Anteil sogar 22 negative Ladungen. Jede negative Ladung ist eine potentielle Andockstelle für Protonen, die sich als katalytisch aktive Zentren eignen. Das sehr intensiv untersuchte PW₁₂O₄₀³⁻ Keggin-Anion gemäß Stand der Technik hat dagegen nur 3 negative Ladungen.

In einer besonders vorteilhaften Ausgestaltung der Erfindung weist die Festkörpersäure eine äußere und/oder innere Porosität mit einem mittleren Porendurchmesser zwischen 0,6 nm und 10 nm, bevorzugt zwischen 0,6 nm und 5 nm und ganz besonders bevorzugt zwischen 0,6 nm und 2 nm, auf. Das ist beispielsweise bei den großen Polyoxomolybdat-Clustern mit mindestens 102 Molybdän-Atomen automatisch der Fall. So umschließt etwa der Mo₁₅₄-Ring einen inneren Hohlraum, dessen Form und Größe durch die Kristallstruktur intrinsisch vorgegeben sind. Der Durchmesser dieses Hohlraums beträgt etwa 2 nm. Durch die Größe, aber auch durch die Form der Poren kann analog zu Zeolith-Katalysatoren gesteuert werden, welche Edukt-Moleküle zu den in der Festkörpersäure gebundenen Protonen als katalytisch aktiven Zentren vordringen. Wird der Katalysator also mit einem Stoffgemisch in Kontakt gebracht, lässt sich einstellen, welche chemische Reaktion katalysiert werden soll. Dies ist insbesondere für selektive Katalyse im Bereich der Petrochemie, etwa für das Cracken von Olefinen, relevant. Die Festkörpersäure lässt sich unabhängig hiervon auf Grund der Porosität auch zur stofflichen Trennung eines Gemisches von Stoffen mit unterschiedlich großen oder unterschiedlich geformten Molekülen verwenden. Die Keggin-strukturierten Katalysatoren nach dem Stand der Technik sind zwar ebenfalls porös, sind Form und Größe der Hohlräume durch die Zwischenräume zwischen den Anionen vorgegeben. Form und Größe können daher über einen größeren Bereich variieren als bei den Polyoxometalaten, bei denen sie durch die Kristallstruktur intrinsisch vorgegeben sind.

In einer besonders vorteilhaften Ausgestaltung der Erfindung ist der kationische Anteil amphiphil. Das bedeutet, dass er einen hydrophoben und einen hydrophilen Anteil umfasst. Die Festkörpersäure geht dann bei Anwesenheit von Wasser nicht in Lösung. Ihre drei Bestandteile (anionischer Anteil, kationischer Anteil und Protonen) wirken arbeitsteilig zusammen: Anionischer Anteil und kationischer Anteil bestimmen die Struktur; der über die ganze Struktur verteilte zumindest teilweise hydrophobe kationische Anteil weist Wasser ab; die an die negativen Ladungen des anionischen Anteils gebundenen Protonen sorgen für die katalytische Wirkung. Viele technologisch relevante, von Säuren getriebene chemische Reaktionen, wie etwa die Hydrolyse von Estern, können nur dann mit Festkörpersäuren durchgeführt werden, wenn diese auch bei großem Wasserüberschuss noch aktiv und vor allem stabil sind. Außerdem kann eine Festkörpersäure mit zumindest teilweise hydrophobem kationischen Anteil auch zur stofflichen Trennung eines Gemisches aus hydrophoben und hydrophilen Bestandteilen verwendet werden. Als amphiphile kationische Anteile sind insbesondere Trimethyltetradecylammonium, Trimethylcetylammonium oder ein anderes langkettiges (mindestens 10 Kohlenstoffatome) Alkylammonium geeignet. Diese kationischen Anteile sind besonders gut geeignet, um komplette Alkalimetall-Wasser-Netzwerke zu substituieren.

Sämtliche für die Festkörpersäure gegebene Offenbarung gilt ausdrücklich auch für das im Folgenden beschriebene Verfahren und umgekehrt.

Im Rahmen der Erfindung wurde ein Verfahren zur Herstellung einer Festkörpersäure aus einem wasserlöslichen Polyoxometalatsalz mit einem anionischen Anteil und einem kationischen Anteil entwickelt. Dieses Verfahren ist erfindungsgemäß zweistufig. Zuerst wird der kationische Anteil des Salzes mindestens teilweise durch größere, hydrophobe oder amphiphile kationische Einheiten ersetzt. Anschließend werden die hydrophoben oder amphiphilen kationischen Einheiten durch Protonen teilsubstituiert.

Nach dem Stand der Technik gelang es bisher nicht, insbesondere große Polyoxomolybdat-Cluster mit mindestens 102 Molybdän-Atomen in eine Festkörpersäure umzuwandeln. Diese Fehlschläge wurden der naturgemäß geringen Stabilität derartiger großer Cluster zugeschrieben. Es wurde nun erkannt, dass durch die erste Substitution des kationischen Anteils das Polyoxometalat gleichzeitig stabilisiert und wasserunlöslich gemacht werden kann. Dies schafft die Voraussetzung dafür, dass anschließend kationische Einheiten durch Protonen ersetzt werden können, ohne dass die Struktur zusammenbricht.

Dabei wird durch die Größe der hydrophoben kationischen Einheiten zumindest teilweise kompensiert, dass bei der Substitution der ursprünglich vorhandenen kationischen Einheiten zwangsläufig auch ein Teil der Wassermoleküle entfernt wird, die die Ionen des Salzes umgeben und schwach an diese gebunden sind. Wird dieses Netzwerk aus Wassermolekülen ersatzlos entfernt, bricht die Struktur zusammen.

Je mehr kationische Einheiten durch Protonen ersetzt werden, desto mehr katalytisch aktive Zentren (Sites) enthält die Festkörpersäure. Andererseits werden jedoch einige der kationischen Einheiten für die Stabilität und die wasserabweisenden Eigenschaften des Festkörpers benötigt. Vorteilhaft werden daher maximal 90 % der hydrophoben oder amphiphilen kationischen Einheiten durch Protonen ersetzt.

Vorteilhaft wird ein Salz mit einem Alkalimetall, insbesondere Natrium oder Kalium, oder Ammonium als kationischem Anteil gewählt. Diese kationischen Anteile sind in Wasser löslich und kristalliseren aus der wässrigen Phase heraus in einer wohlgeordneten Struktur.

In einer besonders vorteilhaften Ausgestaltung der Erfindung wird neben dem kationischen Anteil des Salzes auch ein an das Salz oder im Salz gebundener Wasseranteil mindestens teilweise durch hydrophobe oder amphiphile kationische Einheiten ersetzt. Da dieser Wasseranteil nur schwach gebunden ist, steigert ihr Ersatz durch stärker gebundene kationische Einheiten die Stabilität der Festkörpersäure. Thermogravimetrische Messungen zeigen, dass sich ausgehend von einem Salz aus Na⁺-Kationen und einem anionischen Mo₁₅₄-Cluster nicht nur fast alle Na⁺-Kationen, sondern auch 350 der ursprünglich in dem Salz vorhandenen 400 Wassermoleküle durch Trimethyltetradecylammonium-Kationen ersetzen lassen. Da die Anzahl der eingebrachten hydrophoben kationischen Einheiten durch die Bedingung der Ladungsneutralität vorgegeben ist, ist die Größe dieser Einheiten der entscheidende Parameter, über den eingestellt werden kann, wie viele Wassermoleküle ersetzt werden. Vorteilhaft werden mindestens 80 % des Wasseranteils durch hydrophobe oder amphiphile kationische Einheiten ersetzt.

In einer besonders vorteilhaften Ausgestaltung der Erfindung wird die Substitution des kationischen Anteils des Salzes und ggfs. des Wasseranteils durch hydrophobe oder amphiphile kationische Einheiten in Lösung durchgeführt und das hierbei erhaltene Produkt als fester Niederschlag ausgefällt. Dieses wird für die Substitution durch Protonen in eine Suspension überführt. Dieses zweistufige Vorgehen schafft eine klare Aufgabentrennung. Für die erste Substitution wird die Festkörperstruktur des als Ausgangsmaterial verwendeten Salzes komplett verworfen. Sie wird unter der durch Zugabe der hydrophoben oder amphiphilen kationischen Einheiten vorgegebenen Randbedingung, dass diese Einheiten an die Stelle der ursprünglich vorhandenen kationischen Einheiten treten sollen, neu aufgebaut. Das Ausfällen des Produkts friert diese Struktur ein. Indem nun die Substitution durch Protonen in einer Suspension stattfindet, bleiben die festen Partikel des mit dem hydrophoben oder amphiphilen kationischen Anteil substituierten Salzes als solche erhalten. Damit bleibt während der Substitution durch Protonen die innere Struktur der Festkörpersäure erhalten, solange noch ein für den Erhalt der Stabilität hinreichender Anteil an kationischen Einheiten verbleibt. Wie viele kationische Einheiten durch Protonen substituiert werden, lässt sich zum einen über die Konzentration der Protonen in der Suspension einstellen, etwa über die Menge an Säure, die der Suspension zugegeben wird. Zum anderen ist die Substitution ein gradueller Prozess, so dass ihr Ausmaß über die Reaktionszeit und die Reaktionsbedingungen, wie etwa die Temperatur, eingestellt werden kann.

Vorteilhaft wird der Niederschlag zwecks Überführung in die Suspension in einem Alkohol als Lösungsmittel dispergiert. Die zumindest teilweise hydrophobe kationische Einheit kann in einem solchen Lösungsmittel einfacher als in einem wässrigen Lösungsmittel abgelöst und durch Protonen teilsubstituiert werden.

Das erfindungsgemäße Verfahren kann auch verwendet werden, um in bekannten Festkörpersäuren mit Keggin-Struktur Alkalimetall-Ionen, etwa Cäsium-Ionen, teilweise durch Trimethltetradecylammonium und dieses im zweiten Schritt wiederum teilweise durch Protonen zu substituieren. Damit lässt sich eine solche Keggin-Festkörpersäure wasserunempfindlicher machen. Sie hat dann aber nach wie vor weniger katalytisch aktive Zentren als die erfindungsgemäßen Festkörpersäuren.

### Spezieller Beschreibungsteil

Nachfolgend wird der Gegenstand der Erfindung anhand eines Ausführungsbeispiels des erfindungsgemäßen Verfahrens und einer Figur erläutert, ohne dass der Gegenstand der Erfindung hierdurch beschränkt wird. Es ist gezeigt:

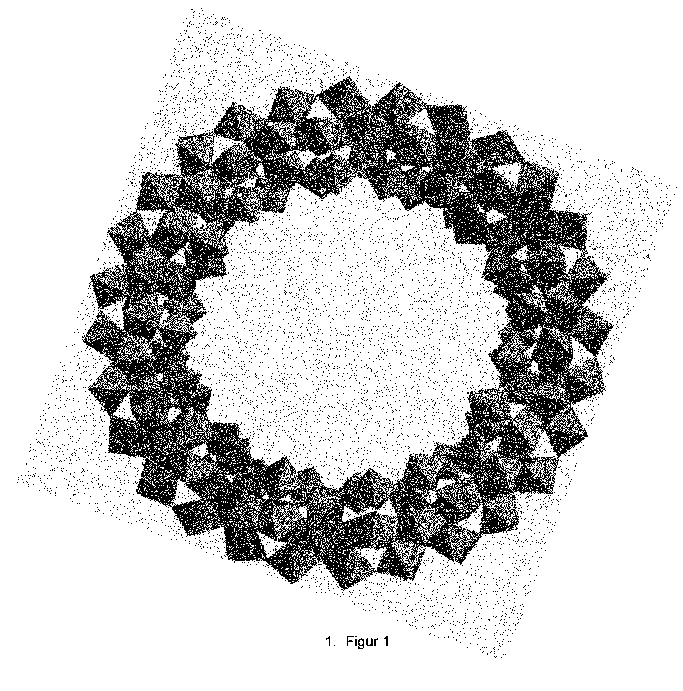

Figur 1: Struktur des Mo₁₅₄-Ringclusters als aus Polyedern zusammengesetzter Ring. Figur 1 zeigt eine modellhafte Skizze des Mo₁₅₄-Ringclusters. Der Ring ist aus einer Vielzahl von Polyedern zusammengesetzt. Im Zentrum eines jeden Polyeders sitzt ein Molybdän-Atom. Auf den Eckpunkten sitzen jeweils entweder oxidische Ionen oder koordinierte Wassermoleküle.

Ein Salz eines Mo₁₅₄-Ringclusters wurde in eine wasserfeste Festkörpersäure umgewandelt. 6 g = 0,195 mmol Na₁₄[Mo₁₅₄O₄₆₂H₁₄(H₂O)₇₀]400H₂O wurden in 200 mL H₂O unter leichter Erwärmung auf 45-50 °C gelöst. Die dunkelblaue Lösung mit einem pH-Wert von 2,3 wurde auf Raumtemperatur abgekühlt. Anschließend wurde unter Umrühren eine Lösung aus 2 g = 5,9 mmol Trimethyltetradecylammoniumbromid in 150 mL H₂O zugegeben. Das Umrühren wurde für weitere 15 min fortgesetzt. Es entstand ein dunkelblauer Niederschlag, der abgesaugt und gefiltert, mit großen Mengen Wasser und schließlich an Luft getrocknet wurde. Dabei wurde eine Ausbeute von 4,5 g erzielt. Durch Elementanalyse und Infrarotspektroskopie wurde bestätigt, dass es sich bei dem Niederschlag um das Trimethyltetradecylammoniumsalz des Mo₁₅₄-Clusters handelt.

Im zweiten Syntheseschritt wurden 2 g dieses Niederschlags in einer Lösung aus 45 ml Methanol und 2 ml 36 %-iger Salzsäure dispergiert. Die Mischung wurde für 12 Stunden gekocht, wobei der entstandene Dampf jeweils abgekühlt und im geschlossenen Kreislauf als Flüssigkeit wieder zugeführt wurde. Nach Abkühlen auf Raumtemperatur bildete sich ein blauer fester Niederschlag, über dem eine grün-blaue Lösung stand. Diese Lösung wurde abgegossen (dekantiert). Der Niederschlag wurde abgesaugt, gefiltert und schließlich an Luft getrocknet. Die letztendliche Ausbeute an erfindungsgemäßer Festkörpersäure betrug 0,8 g.

Durch Adsorptionskalorimetrie mit Ammoniak wurde eine Adsorptionsenthalpie von 140 kJ/mol festgestellt und somit bestätigt, dass es sich bei der so hergestellten erfindungsgemäßen Festkörpersäure um eine starke Säure handelt.

Die direkte Behandlung des ursprünglichen Salzes mit Säure ohne vorherige Substitution der kationischen Anteile führt nicht auf ein saures Derivat dieses Salzes; stattdessen wird das Salz wegen seiner geringen hydrolytischen Stabilität zersetzt.

## Patentansprüche

1. Festkörpersäure, umfassend einen anionischen Anteil aus einer Mehrzahl von Oxyanionen mindestens eines Metalls sowie einen kationischen Anteil, der durch Protonen teilsubstituiert ist,
**dadurch gekennzeichnet, dass**
das Metall des anionischen Anteils mindestens teilweise in einer niedrigeren als der höchsten Oxidationsstufe vorliegt.

2. Festkörpersäure nach Anspruch 1, **dadurch gekennzeichnet, dass** zwischen 10 % und 40 % der Metallatome des anionischen Anteils in einer niedrigen als der höchsten Oxidationsstufe vorliegen.

3. Festkörpersäure nach einem der Ansprüche 1 bis 2, **dadurch gekennzeichnet, dass** das Metall des anionischen Anteils ein Übergangsmetall, insbesondere Molybdän, ist.

4. Festkörpersäure nach einem der Ansprüche 1 bis 3, **dadurch gekennzeichnet, dass** der anionische Anteil in Form von Clustern mit jeweils mindestens 102 Molybdän-Atomen vorliegt.

5. Festkörpersäure nach Anspruch 3 oder 4, **dadurch gekennzeichnet, dass** das Übergangsmetall Molybdän ist und durch Vanadium oder Eisen teilsubstituiert ist.

6. Festkörpersäure nach einem der Ansprüche 1 bis 5, **dadurch gekennzeichnet, dass** sie eine äußere und/oder innere Porosität mit einem mittleren Porendurchmesser zwischen 0,6 nm und 10 nm, bevorzugt zwischen 0,6 nm und 5 nm und ganz besonders bevorzugt zwischen 0,6 nm und 2 nm, aufweist.

7. Festkörpersäure nach einem der Ansprüche 1 bis 6, **dadurch gekennzeichnet, dass** der kationische Anteil amphiphil, d.h. mindestens teilweise hydrophob, ist.

8. Verfahren zur Herstellung einer Festkörpersäure aus einem wasserlöslichen Polyoxometalatsalz mit einem anionischen Anteil und einem kationischen Anteil, **gekennzeichnet durch** folgende Schritte:
• der kationische Anteil des Salzes wird mindestens teilweise **durch** größere, hydrophobe oder amphiphile kationische Einheiten ersetzt;
• anschließend werden die hydrophoben oder amphiphilen kationischen Einheiten **durch** Protonen teilsubstituiert.

9. Verfahren nach Anspruch 8, **dadurch gekennzeichnet, dass** maximal 90 % der hydrophoben oder amphiphilen kationischen Einheiten durch Protonen ersetzt werden.

10. Verfahren nach einem der Ansprüche 8 bis 9, **dadurch gekennzeichnet, dass** ein Salz mit einem Alkalimetall, insbesondere Natrium oder Kalium, oder Ammonium als kationischem Anteil gewählt wird.

11. Verfahren nach einem der Ansprüche 8 bis 10, **dadurch gekennzeichnet, dass** neben dem kationischen Anteil des Salzes auch ein an das Salz oder im Salz gebundener Wasseranteil mindestens teilweise durch hydrophobe oder amphiphile kationische Einheiten ersetzt wird.

12. Verfahren nach Anspruch 11, **dadurch gekennzeichnet, dass** mindestens 80 % des Wasseranteils durch hydrophobe oder amphiphile kationische Einheiten ersetzt werden.

13. Verfahren nach einem der Ansprüche 8 bis 12, **dadurch gekennzeichnet, dass** die Substitution des kationischen Anteils des Salzes und ggfs. des Wasseranteils durch hydrophobe oder amphiphile kationische Einheiten in Lösung durchgeführt und das hierbei erhaltene Produkt als fester Niederschlag ausgefällt wird, welcher für die Substitution durch Protonen in eine Suspension überführt wird.

14. Verfahren nach Anspruch 13, **dadurch gekennzeichnet, dass** der Niederschlag zwecks Überführung in die Suspension in einem Alkohol als Lösungsmittel dispergiert wird.
